# EUROPEAN PATENT SPECIFICATION

(11) **EP 1 965 632 B1**
(45) Date of publication and mention of the grant of the patent: **22.04.2009**
(21) Application number: 06819872.0
(22) Date of filing: 30.11.2006
(51) Int. Cl.: A01G 9/14, B23P 19/04, B65G 61/00

(54) **APPARATUS AND METHOD FOR ASSEMBLING SHELVING UNITS**
VORRICHTUNG UND VERFAHREN ZUM ZUSAMMENBAU VON REGALEINHEITEN
APPAREIL ET PROCEDE D'ASSEMBLAGE D'UNITES D'ETAGERE

(30) Priority: 02.12.2005 NL 1030586
(43) Date of publication of application: 10.09.2008
(73) Proprietor: ISO Groep Machinebouw B.V., 5311 PC Gameren (NL)
(72) Inventor: POORTVLIET, Dirk Marinus, NL-4264 ST Veen (NL); DE KONING, D.J., NL-4261 DA Wijk En Aalburg (NL); STRUIJK, W., NL-5316 BG Delwijnen (NL); HOEKSTRA, W., NL-2515 AR 'S-Gravenhage (NL)
(74) Representative: Clarkson, Paul Magnus
(86) International application number: PCT/EP2006/069154
(87) International publication number: WO 2007/063109

(56) References cited:
- EP-A- 1 243 534
- EP-A- 1 505 009
- WO-A-20/06018434
- DE-A1- 10 125 790
- DE-U1-7202005 005 08
- GB-A- 2 056 681

## Description

The current invention relates to an apparatus and a method for assembling or putting together shelving units, in particular trolleys for transporting flowers, plants and the like. The invention further relates to systems comprising in combination a plurality of such shelving units and an apparatus for assembling the shelving units.

Shelving units are known in various fields, see e.g. document EP-A-1 505 009. Particularly in commercial fields, such shelving units may be assembled for use and subsequently require dismantling for the purpose of transport or storage. At certain locations, such as at the wholesaler's, this process may take place frequently and may involve considerable manpower.

It is known in the horticultural industry to use trolleys, sometimes referred to as "Danish carts" to transport flowers and other plants. These trolleys are in the form of mobile shelving units comprising a rectangular base of approximately 1 m by 50 cm, provided with wheels. Upright frame elements are inserted into sockets at the four corners of the base and a number of shelves or planks are supported by the frame elements. The shelves are provided with hooks or pins for engagement with appropriate slots in the frame elements. The number of shelves and their spacing will vary according to the plants being transported. It is estimated that 21 million of such trolleys are in operation worldwide and on average each trolley will rotate back to a central depot four times in a given year.

On returning empty to a depot, the trolleys are preferably knocked-down or dismantled to save space. The shelves are removed one by one from the frame elements by manipulating the hooks out of the slots. Each shelf may then be stacked, e.g. on an empty trolley. Broken or damaged shelves may be discarded or separated. Finally, the uprights are disengaged from the base and the bases and the uprights are stacked separately. This operation involves considerable manpower. At the moment that the market gardener is ready to harvest, a large number of trolleys needs to be put together again to receive the harvest for transport.

Putting together such trolleys is a complex operation. In particular, each trolley may be assembled differently with a different number of shelves and a different spacing between the shelves. Furthermore, different sorts of shelves have been produced and these are now randomly distributed throughout the industry. As a consequence, the shelves encountered in the assembly of a single individual trolley may vary from one another, e.g. in their width by up to 2 cm. Additionally, the shelves may be deformed or broken and it may be difficult to insert them into the uprights of the base.

Clearly, there is a need to provide a system and an apparatus wherein at least part of the inconveniences arising when assembling such trolleys, may be overcome.

According to the present invention there is provided an apparatus for assembling a shelving unit consisting of a frame and a plurality of detachable shelves supported by the frame, the apparatus comprising : a supply section for supplying a shelf ; a testing section for approving or rejecting the supplied shelf; a positioning section for gripping an approved shelf and subsequently mounting the shelf in the frame ; and a control unit for controlling the apparatus.

The control apparatus may control automatic or semi-automatic operation of the supply section, the testing section and/or the positioning section. By this combination of elements it can be provided that only approved shelves, which meet certain criteria, are mounted in the frame.

According to the invention, the testing section comprises correcting elements which grip the shelf with such a force to distort it to a desired pattern. Supplied shelves may be deformed to such an extent that they would no longer fit into the frame. In particular, they may be twisted or bent. Also, the support elements which rest on the frame, may be bent or even absent. Such deviations from a standard size may hamper or obstruct assembling a shelving unit. By gripping certain components of the shelf and by exerting a force, certain irregularities may be repaired. To be able to distort and correct the shelf, the correcting elements will preferably exert a force on the gripped section of at least 1000 N. Preferably, this force may even be over 2000 N. In general, the force exerted by the alignment elements will be more than 10 x the force that is necessary to only grip and move the shelf.

According to a further feature of a preferred embodiment, the shelf is provided with projecting pins that fit into slots in the frame. These pins are gripped by the correcting elements such that bent pins are straightened. It will be clear that shelves and pins that do not deviate from the desired size or pattern, will not or hardly be bent.

Preferably, the testing section is further provided with one or more measuring elements, such that a number of dimensions of the shelf may be determined in the testing section. Possible dimensions may include: width, length, depth, degree of concaveness, curvature, torsion, the presence of an edge, position and presence of support pins and the like. The control unit is able to store a number of standard dimensions of a shelf in a memory. Subsequently, the testing section may compare the measured dimensions with the standard dimensions and reject a supplied shelf that deviates as such from the standard data. In a simple preferred alternative, the standard dimensions may be established mechanically by the positions of the sensors.

Shelves that do not meet predetermined requirements will be rejected by the testing section. To this end, the apparatus further comprises a removal facility capable of removing rejected shelves. This may be e.g. an empty cart that is parked under the testing section. On rejecting a shelf, the testing section may release the shelf such that it is dumped into the cart.

A particularly important feature is the centring or other such position determination of the shelf. In order for the shelf to be quickly and correctly mounted in the frame, its precise position and orientation with respect to a known reference point must be known. For a shelf mounted on pins, the positions of the pins are decisive. According to an important aspect of the invention, the testing section is able to determine the location of the shelf during the process of testing. To guarantee accurate handling of a shelf, such that it fits into the frame, preferably, a standardised or tested element of the shelf is then gripped in the positioning section. With shelves that are provided with projecting pins which fit into slots in the frame, preferably, the projecting pins are determined. The positioning section may then be provided with a number of gripping elements that grip the projecting pins. It is also possible that in the positioning section a shelf is gripped at another location, provided that the relative position of the gripped component relative to the pins or possible other support elements is well determined. Alternatively, this relative position may be determined by the positioning section or otherwise, prior to or during the mounting of the shelf in the frame

In a preferred embodiment, the positioning section further comprises a lifting element to align the relative heights of a gripped shelf with its desired position in the frame. The lifting element may have the form of e.g. a robot arm, which is movable in all directions to position a shelf from the testing section into the frame. In another alternative, the frame or even the testing section may be mounted on a lifting element for an up- and down-movement. Because of this, it can be provided that a shelf is essentially moved only horizontally from the testing section to the positioning section. This an extremely important factor in determining the speed of the apparatus.

It is also important to be able to level the heights of the individual components of the frame, before a shelf is fitted into the frame. To this end, the apparatus may comprise a levelling system to level the positions of the supports of the separate components of the frame. Certain frames may be provided with extension pieces for increasing the height of the frame. Means to correctly position and level these extension pieces may also be provided.

According to the preferred embodiment, the supply section supplies shelves, one by one, from a stack. The stack is located e.g. on a cart. The supply section may be a similar apparatus to that described in the Dutch patent application No. 1027987 . According to that device, belts mounted over rollers grip the stack of shelves. The belts may be inflated to grip the shelves and may also be actuated to rotate such that the gripped shelves may be supplied to the upper side of the belts in a controlled manner. By supplying the shelves on the same level as the testing section, the speed of the apparatus may be maximized.

To put a supplied shelf in its position in the testing section, the supply section may also comprise an arm provided with suction cups. It may cooperate with the aforementioned supply belt or it may take shelves one by one from a stack. Instead of suction cups, depending on the construction of the shelves, other similar holding elements may be used, e.g. magnets.

The control unit may control the apparatus fully automatically. To this end, only e.g. the desired locations of the shelves in the frame should be indicated in advance, as well as the rejection parameters. It is also possible to work partly automatically as a result of which a driver may indicate each desired position of a shelf and also may generate a rejection signal based on measurements disclosed to him.

The current invention also provides a method for assembling a shelving unit, wherein the shelving unit comprises a frame and a plurality of detachable shelves supported by the frame, the method comprising : supplying a shelf to an testing section ; measuring a number of features of the shelf and comparing the measurements with predetermined requirements; distorting the shelf to optionally adjust it to the predetermined requirements; approving a shelf that meets the requirements ; gripping the approved shelf; and mounting the gripped shelf in the frame. In this way, because each operation may be carried out mechanically, such a shelving unit may be put together accurately and correctly with little effort and manpower.

As indicated above, the method may also comprise other steps, such as rejecting and removing shelves that do not meet the predetermined requirements. The step of mounting the approved shelves in a frame may also be omitted or performed e.g. manually at a later stage.

According to a preferred embodiment of the method, the measuring, approving, gripping, mounting and optionally also supplying a shelf, occurs at a substantially constant height, as a result of which movement of the shelf is reduced and an increased process speed may be realized.

The invention relates also to a system comprising a combination of a shelving unit or trolley, which comprises a frame and a plurality of detachable shelves supported by the frame, and an apparatus for assembling the shelving unit as described above.

An embodiment of the invention will now be described in more detail and will only serve as an example, with reference to the attached figures in which:
Fig. 1. shows in perspective a cart for flowers for use in the invention, including a detail of the connection between the shelf and the uprights ;
Fig. 2. shows a schematic system overview of the components of an apparatus according to the invention ;
Fig. 3. shows the supply section of a preferred embodiment of the invention ;
Fig. 4. shows the testing section of the preferred embodiment of Fig. 3 ;
Fig. 4a shows the testing section such as in Fig. 4 when inspecting a shelf;
Fig. 5. shows the positioning section of the preferred embodiment of Fig. 3 ; and
Fig. 6. shows a plan view of the positioning section of Fig. 5.

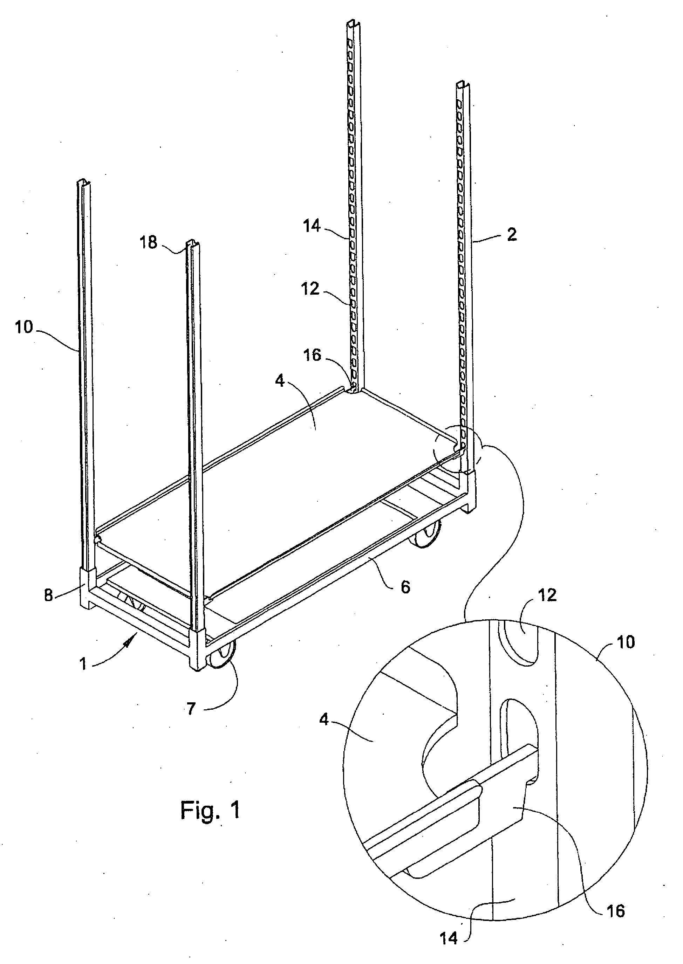

Figure 1 shows a perspective view of a cart **1** of the type intensively used in the flower industry. The cart **1** comprises a frame **2** and a plurality of substantially planar shelves **4** mounted on the frame (for reasons of clarity only one shelf is depicted). In the current example the frame comprises a base **6** mounted on wheels **7.** Each corner of the base has been provided with a socket **8** for receiving an upright **10.** Although the invention will further be described in relation to such a cart for flowers, it will be immediately apparent for the person skilled in the art that the invention is also applicable to other forms of trolleys or shelving units. In this respect, it is assumed that the term shelf is not restricted to simple planar shelves or plates. The term shelf also comprises : shelving units ; planks ; baskets ; cross elements and other supporting parts that may be utilized in a shelving system.

As is shown in detail in Figure 1, each upright **10** comprises an essentially U-shaped groove **18** wherein the support surfaces **14** are directed inwardly. The support surfaces **14** are provided with elongated vertical slots **12** and the shelves **4** are provided with pins **16** that fit into the slots **12** to keep the shelves **4** at the desired height between the uprights **10.** As will be further described below, the uprights **10** may be removed from the sockets **8** for stacking the cart **1** for transport or storage. The uprights **10** can also be inserted into the sockets **8** such that the support surfaces **14** face outwardly. In this orientation the shelves **4** can be stacked on the cart **1** such that the pins **16** slide in the open U-shaped groove **18** of the uprights **10.** Although not shown, extension pieces may be provided to optionally extend the uprights **10.**

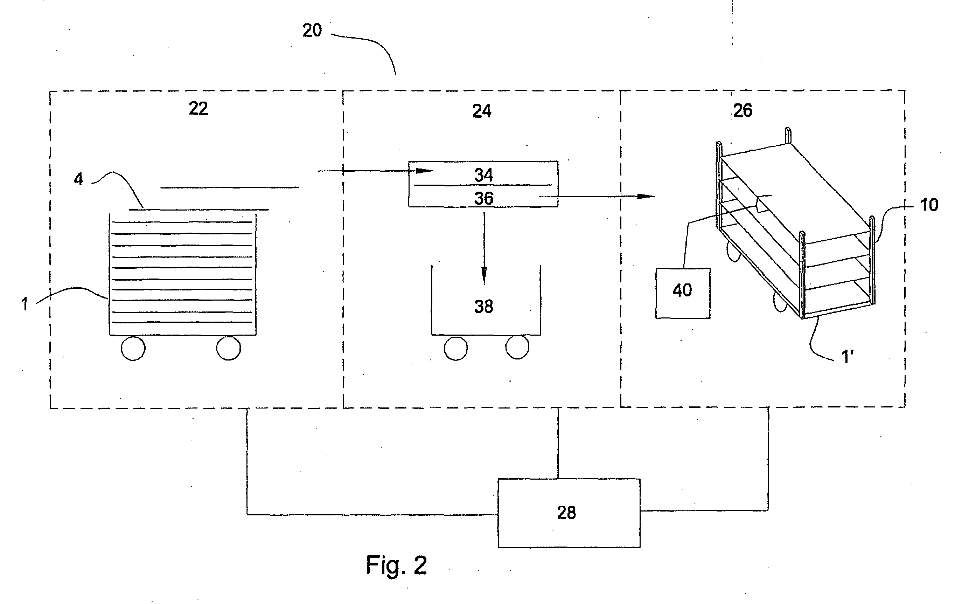

Figure 2 shows a schematic overview of the components of an apparatus **20** according to the invention. The apparatus **20** consists of a supply section **22,** a testing section **24,** a positioning section **26** and a control unit **28**. Although in the following, reference will be made to physically separate sections that perform each task separately and interact with one another, it will be understood, that the sections may be integrated into combined sections that perform a number of separate tasks.

A full cart **1** on which a number of shelves **4** are stacked, is located in the supply section **22.** The testing section **24** consists of a correcting section **34** and a measuring section **36.** Furthermore, a transport bin **38** is located underneath the testing section **24.** A robot arm **40** is located in the positioning section **26.** Within reach of the robot ann **40** a second cart **1'** is positioned which, in this case, is in an uncompleted state. The control unit **28** is electronically connected with the supply section **22,** the testing section **24** and the positioning section **26.**

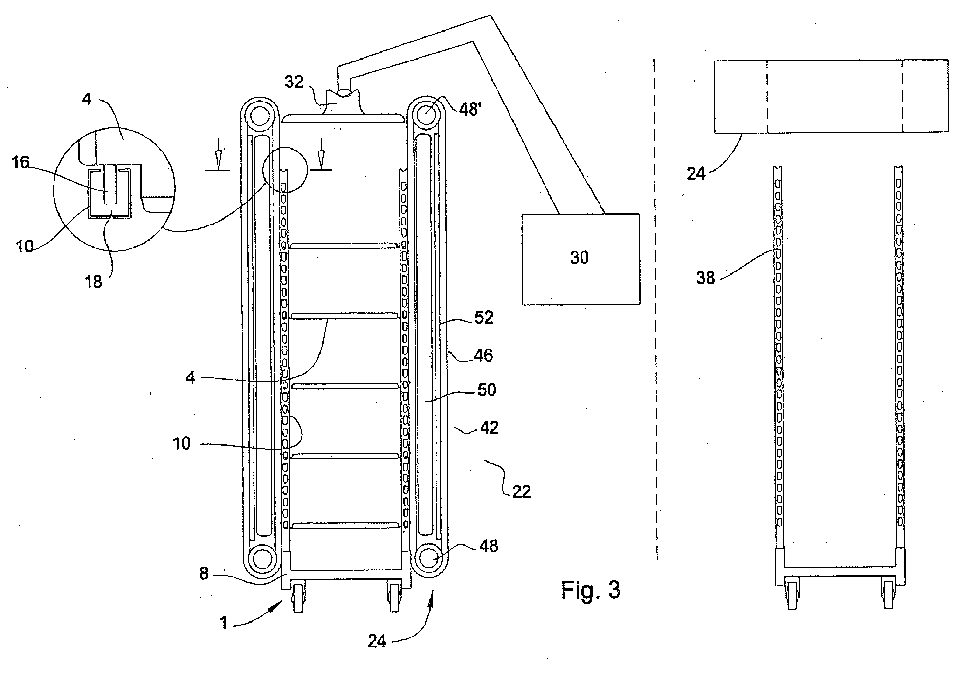

Figure 3 shows in further detail the supply- **22** and testing sections **24** of a preferred embodiment of the invention with a fully stacked cart **1.** As can be seen in the details, the uprights **10** are inserted into the sockets **8** such that the pins **16** of the shelves **4** slide into the open U-shaped groove **18** of the uprights **10.** For the sake of clarity, not all shelves **4** in the cart **1** are depicted. A cart **1** may carry e.g. up to sixty shelves.

The supply section **22** includes a robot arm **30** and a supply system **42.** The robot arm **30** is provided with suction cups **32** that are able to hold and to move a shelf **4** from the supply system **42**. The supply system **42** comprises a number of gripping belts **46,** mounted to rotate around a pair of rollers **48, 48'.** Each belt **46** is operated by a drive (not shown) provided on the lower roller **48.** The belt **46** is made of a resilient material. Within the space defined by the belt **46** and the rollers **48, 48'** an inflatable tube **50** is located. The inflatable tube **50** is supported by a plate **52** on the side opposite to the shelves **4.** The inflatable tube **50** may be inflated by means not shown, as a result of which the resilient belt **46** inflates and presses outwardly against the shelves **4.** The distension of the belt **46** is sufficient to compensate for possible differences in size of the shelves **4.** By operating the belts **46** to counter-rotate, the shelves **4** may be moved upwardly to the height of the robot arm **30.**

To move a fully-stacked cart **1** into the supply section, the belts **46** can be opened or moved apart from each other. It is also possible to lower the belts **46** over the cart by rolling them down from above.

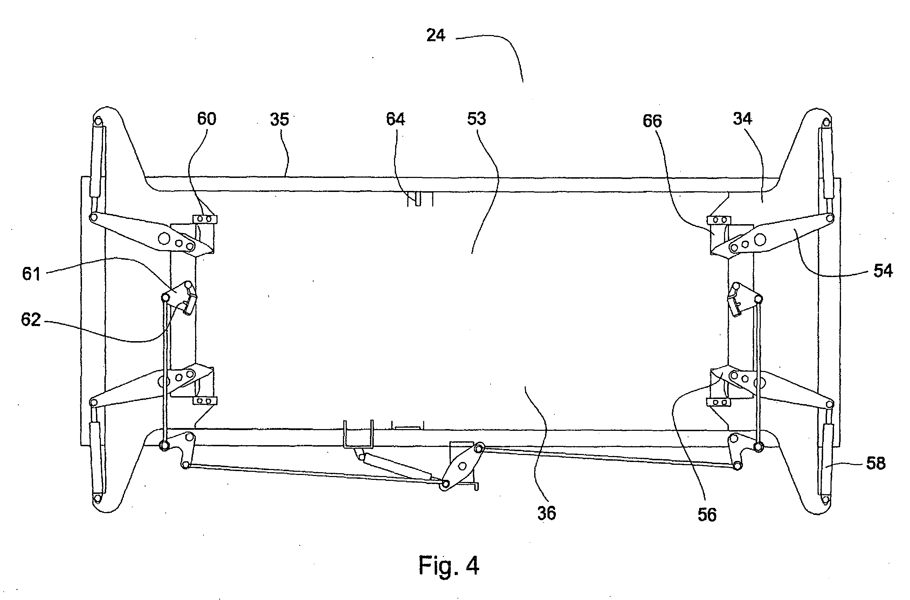

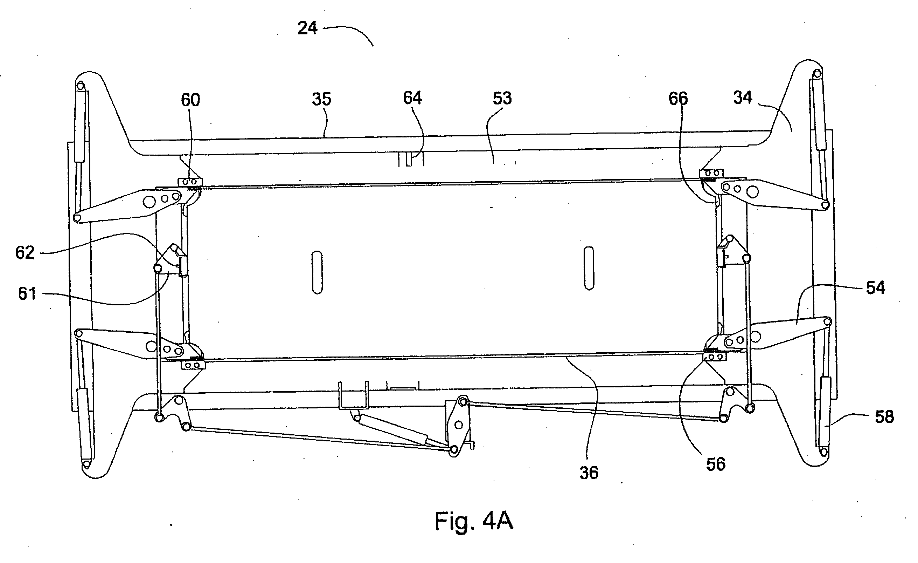

In Figure 4, the testing section **24** is shown more closely from which it can be seen that the correction section **34** consists of a frame **35** and four alignment elements **54.** The frame **35** has a slot **53** with four hinged elements **66** of such a size that a shelf **4** in the slot **53** can be supported by the hinged elements **66.** This can be seen in Figure 4a. The alignment elements **54** have the shape of a pair of tongs **56** that are operated by the force of a pneumatic cylinder **58.** In a first position of the tongs **56** (Fig. 4) an opening is located to receive the pins **16** of a shelf **4.** A shelf **4** can be put in the slot **53** on the hinged elements **66** by the robot arm **30** of the supply section. Subsequently, the pair of tongs **56** will close using a force of approximately 2000 N. Possible deviations of the pins **16** are thereby corrected. A precision of ± 2 mm for the pins is desired to ensure that they will fit well into the slots **12** in the uprights **10.**

In Figure 4, a number of measuring elements of the measuring section **36** can also be seen. Each pair of tongs **56** is provided with a pin sensor **60** to guarantee the presence of a pin **16** in the pair of tongs **56.** It may have the shape of a contact electrode, possibly in a plastic sleeve, that detects the metal pin **16.** Also centering elements **61** are provided with sensors **62** that detect the presence of the metal strip forming the edge of the shelf. Curvature sensors **64** measure the deviation of the centre of the shelf from its desired position, as a result of which shelves that are undesirably curved may be rejected. Although not further described herein, other sensors e.g. optical, video, contact, piezo, may be applied to determine e.g. the size, weight, cleanliness and otherwise the state of the shelves.

Under control of the control unit **28,** the signals of the different sensors are registered. A shelf **4** satisfying the measurements is approved and subsequently supplied to the positioning section **26.** A shelf **4** that does not satisfy one or more measurements is rejected. By folding away the hinged elements **66** and opening of the pair of tongs **56,** the rejected shelf **4** drops into the waiting transport bin **38.** The transport bin **38** may also be an empty cart and the shelf **4** may then be introduced in a controlled manner between the uprights **10.**

In the embodiment shown in Figure 4, the sensors are mechanically adjusted feelers. This means that the position of the sensor itself determines the accuracy of the result. Therefore, by adjusting the curvature sensors **64** to a higher position, the tolerance for curvature of a shelf is reduced. In an alternative variant, instead of sensors, actual measuring elements may be used to measure all important dimensions and properties of the shelf **4** and to compare against predetermined standard dimensions. The standard dimensions and the acceptable tolerances are stored in a memory of the control unit as a pattern. The memory could then store several patterns for use with several dimensions or features of a cart. This could also possibly be indicated automatically e.g. by a label or bar code on the shelves.

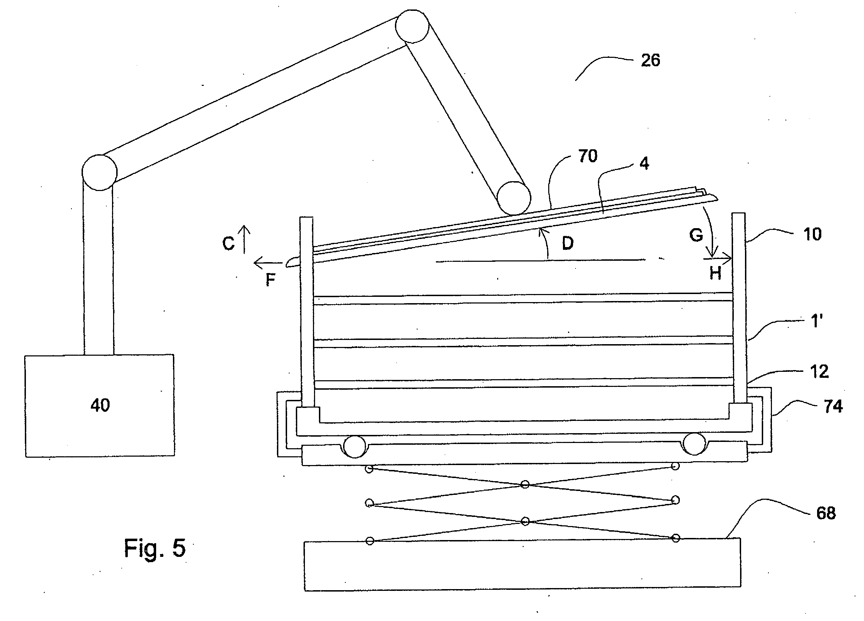

Figure 5 shows in more detail the positioning section **26** according to the invention. The positioning section **26** comprises a robot arm **40** and a lifting element **68.** The robot arm **40** is provided with a gripping part **70** that ensures gripping of the shelf **4.** A cart to assemble **1'** is mounted on the lifting element **68.** By using the lifting element **68,** it is possible to move the cart **1'** upwards and downwards such that slots **12** for the next shelf **4** to be mounted are always at the same height. This height is then preferably adjusted to the height of the frame **35** of the testing section **24.** To ensure that the slots **12** in all four uprights **10** are in the same position, the lifting element **68** is provided with calibration elements **74.** The calibration elements **74** register the height of the bottom slot **12** in each upright **10** and transmit it to the control unit **28.** By doing so, the uprights **10** may be independently adjusted to the same height by not further specified adjusting facilities. Of course, other ways of adjusting the uprights **10** may also be envisaged.

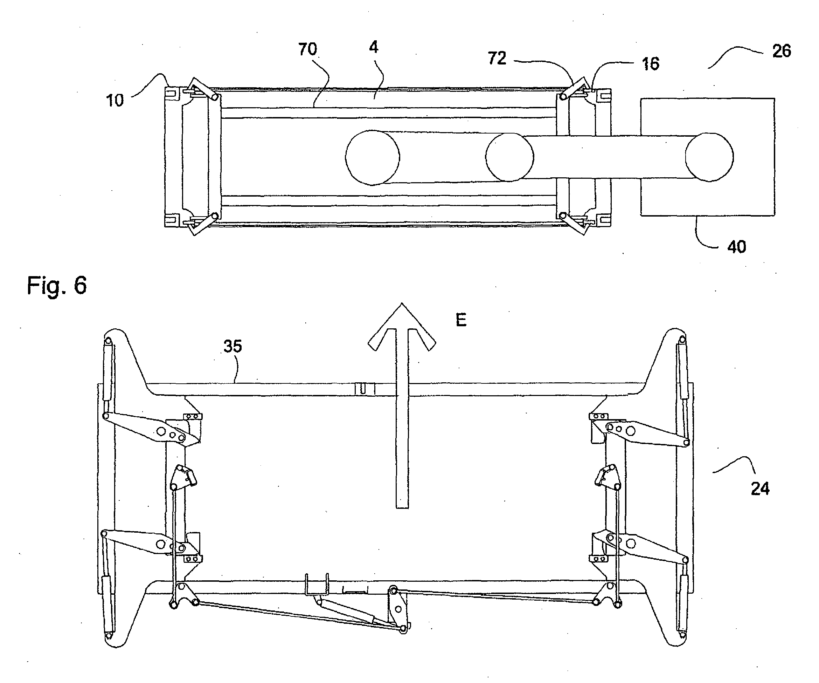

In Figure 6, a plan view of the positioning section **26** is shown. It can be seen that the gripping part **70** comprises four gripping elements **72** each gripping a pin **16** of the supplied shelf **4.** Because the shelf **4** has been inspected closely, the positions of these pins **16** are known. Also, to fit between the uprights **10** of the cart **1',** the gripping part **70** has a size which corresponds substantially with the size of a shelf **4.**

With reference to Figures 5 and 6, an approved shelf **4** is gripped by the robot arm **40** from the testing section **24,** firstly by a short movement C upwardly over the frame **35.** Subsequently or simultaneously, the shelf **4** is tilted D over an angle of 20 degrees. In this position, enough room arises to move the shelf **4** forward E between the uprights **10** of the waiting cart **1'.** In a first lateral movement F, the pins **16** are fitted into the slots **12** on the lowest edge. Subsequently, by tilting back G and a second lateral movement H of the shelf **4,** the other pins **16** are fitted into their slots **12.** By avoiding as much as possible vertical movements of the shelf **4,** the transfer from the testing section to the frame can be performed in less than 7 seconds.

The above examples illustrate preferred embodiments of the current invention. It should be noted that several other arrangements and alternatives may also be considered that fall within the scope of the invention, as defined in the attached claims.

## Claims

1. Apparatus (20) for assembling a shelving unit comprising a frame (2) and a plurality of detachable shelves (4) supported by the frame, the apparatus comprising :
a supply section (22) for supplying a shelf ;
a testing section (24) for approving or rejecting the supplied shelf ;
correcting elements (56) arranged to grip the shelf with a force sufficient to distort it into a desired pattern for approval by the testing section;
a positioning section (26) for gripping an approved shelf and subsequently mounting the shelf in the frame ; and
a control unit (28) for controlling the apparatus.

2. Apparatus according to claim 1, wherein the correcting elements are arranged to grip the shelf with a force of at least 1000 N.

3. Apparatus according to claim 1 or claim 2, wherein the shelf is provided with support elements which fit on supports in the frame and wherein the correcting elements are arranged to grip the support elements.

4. Apparatus according to any preceding claim, wherein the control unit stores a number of standard dimensions of a shelf, the testing section Further comprises a measuring element and the testing section is able to determine a number of dimensions of the shelf, selected from the group consisting of: width; length; depth; degree of concavity; curvature; torsion; the presence of an edge; and the position and presence of support elements and wherein the testing section compares the dimensions with the standard dimensions and rejects a supplied shelf that deviates from the standard data.

5. Apparatus according to any of the claims 1 to 4, wherein the testing section comprises a number of sensors and the sensors are mechanically adjustable.

6. Apparatus according to any of the preceding claims, further comprising a disposal section for removal of the rejected shelves.

7. Apparatus according to claim 3, wherein the frame consists of separate components that are each provided with supports, the apparatus further comprising a levelling system to level the heights of the supports of the separate components of the frame.

8. Apparatus according to any of the preceding claims, wherein the positioning section further comprises a lifting element for lifting the frame such that a gripped shelf may be mounted at a height in the frame which is substantially in accordance with the height of the testing section.

9. Apparatus according to any of the preceding claims, wherein the supply section supplies the shelves one by one from a stack, preferably at substantially the same height as the testing section.

10. Method for assembling a shelving unit, the shelving unit comprising a frame (2) and a plurality of detachable shelves (4) supported by the frame, the method comprising :
supplying a shelf to a testing section (24) ;
testing a number of features of the shelf and comparing the features with predetermined requirements ;
distorting the shelf to optionally adjust it to the predetermined requirements. approving shelves that meet the requirements ;
gripping the approved shelf ; and
mounting the gripped shelf in the frame.

11. Method according to claim 10, wherein the distortion of the shelf occurs by gripping a part of the shelf with a correcting element with a force of more than 1000 N.

12. Method according to either of the claims 10 or 11, further comprising rejecting and removing shelves that do not meet the predetermined requirements.

13. Method according to any of the claims 10 to 12, in which the checking, approving, gripping, mounting and optionally also supplying of a shelf occurs substantially at a constant height.

14. System comprising a combination of a plurality of shelving units, each having a frame and a plurality of detachable shelves supported by the frame, and an apparatus for assembling the shelving units according to any one of the claims 1 up to and including 9.

15. System according to claim 14, wherein the shelving units each comprise a trolley provided with several wheels.

## Patentansprüche

1. Vorrichtung (20) zum Zusammenbauen einer Regaleinheit, die einen Rahmen (2) und mehrere von dem Rahmen gehaltene abnehmbare Böden (4) aufweist, wobei die Vorrichtung aufweist:
einen Zuführabschnitt (22) zum Zuführen eines Bodens;
einen Testabschnitt (24) zum Akzeptieren oder Zurückweisen des zugeführten Bodens;
Korrekturelemente (56), die ausgebildet sind zum Greifen des Bodens mit einer hinreichenden Kraft, um es in eine zum Akzeptieren durch den Testabschnitt geeignete Konfiguration zu verformen;
einen Positionierungsabschnitt (26) zum Greifen eines akzeptierten Bodens und zum anschließenden Montieren des Bodens in dem Rahmen; und
eine Steuereinheit (28) zum Steuern der Vorrichtung.

2. Vorrichtung nach Anspruch 1, bei der die Korrekturelemente zum Greifen des Bodens mit einer Kraft von mindestens 1000 N ausgebildet sind.

3. Vorrichtung nach Anspruch 1 oder 2, bei der der Boden mit Tragelementen versehen ist, die auf Tragelemente in dem Rahmen passen, und bei der die Korrekturelemente zum Greifen der Tragelemente ausgebildet sind.

4. Vorrichtung nach einem der vorhergehenden Ansprüche, bei der die Steuereinheit eine Anzahl von Standardabmessungen eines Bodens speichert, wobei der Testabschnitt ferner ein Messelement aufweist und der Testabschnitt in der Lage ist, eine Anzahl von Bemessungen des Bodens zu bestimmen, die gewählt sind aus der Gruppe, zu der zählen: Breite; Länge; Tiefe; Grad an Konkavität; Krümmung; Torsion; Vorhandensein einer Kante; und Position und Vorhandensein von Tragelementen, und bei der der Testabschnitt die Bemessungen mit Standardbemessungen vergleicht und einen von den Standarddaten abweichenden zugeführten Boden zurückweist.

5. Vorrichtung nach einem der Ansprüche 1 bis 4, bei der der Testabschnitt eine Anzahl von Sensoren aufweist und die Sensoren mechanisch einstellbar sind.

6. Vorrichtung nach einem der vorhergehenden Ansprüche, ferner mit einem Entsorgungsabschnitt zum Entfernen der zurückgewiesenen Böden.

7. Vorrichtung nach Anspruch 3, bei der der Rahmen aus separaten Komponenten besteht, die jeweils mit Tragelementen versehen sind, wobei die Vorrichtung ferner ein Abgleichsystem zum Abgleichen der Höhen der Tragelemente der separaten Komponenten des Rahmens aufweist.

8. Vorrichtung nach einem der vorhergehenden Ansprüche, bei der der Positionierungsabschnitt ferner ein Hebelement zum derartigen Heben des Rahmens aufweist, dass ein gegriffener Boden in einer Höhe an dem Rahmen montiert werden kann, die im Wesentlichen der Höhe des Testabschnitts entspricht.

9. Vorrichtung nach einem der vorhergehenden Ansprüche, bei der der Zuführabschnitt die Böden einzeln nacheinander von einem Stapel her zuführt, und zwar vorzugsweise im Wesentlichen auf der gleichen Höhe wie der Testabschnitt.

10. Verfahren zum Zusammenbauen einer Regaleinheit, wobei die Regaleinheit einen Rahmen (2) und mehrere von dem Rahmen gehaltene abnehmbare Böden (4) aufweist, mit folgenden Verfahrensschritten:
Zuführen eines Bodens zu einem Testabschnitt (24);
Testen einer Anzahl von Merkmalen des Bodens und Vergleichen der Merkmale mit vorbestimmten Anforderungen;
Verformen des Bodens zum optionalen Anpassen des Bodens an die vorbestimmten Anforderungen;
Akzeptieren von Böden, die den Anforderungen entsprechen;
Greifen des akzeptierten Bodens; und
Montieren des gegriffenen Bodens in dem Rahmen.

11. Verfahren nach Anspruch 10, bei dem das Verformen des Bodens erfolgt, indem ein Teil des Bodens mittels eines Korrekturelements mit einer Kraft von mehr als 1000 N gegriffen wird.

12. Verfahren nach Anspruch 10 oder 11, ferner mit dem Zurückweisen und Entfernen von Rechnern, welche die vorbestimmten Anforderungen nicht erfüllen.

13. Verfahren nach einem der Ansprüche 10 bis 12, bei dem das Prüfen, Akzeptieren, Greifen, Montieren und optional auch das Zuführen eines Bodens im Wesentlichen auf einer konstanten Höhe erfolgen.

14. System mit einer Kombination aus mehreren Regaleinheiten, die jeweils einen Rahmen und eine Anzahl dem Rahmen gehaltener, abnehmbarer Böden aufweisen, und mit einer gemäß einem der Ansprüche 1 bis einschließlich 9 ausgebildeten Vorrichtung zum Zusammenbauen der Regaleinheiten.

15. System nach Anspruch 14, bei dem die Regaleinheiten jeweils einen Wagen mit mehreren Rollen aufweisen.

## Revendications

1. Appareil (20) d'assemblage d'une unité d'étagères comprenant un cadre (2) et une pluralité d'étagères détachables (4) supportées par le cadre, l'appareil comprenant :
une section de distribution (22) pour distribuer une étagère ;
une section d'essai (24) pour approuver ou rejeter l'étagère distribuée ;
des éléments de correction (56) agencés pour serrer l'étagère avec une force suffisante pour la déformer en une configuration souhaitée pour l'approbation par la section d'essai ;
une section de positionnement (26) pour saisir une étagère approuvée et par la suite monter l'étagère dans le cadre ; et
une unité de commande (28) pour commander l'appareil.

2. Appareil selon la revendication 1, dans lequel les éléments de correction sont agencés pour serrer l'étagère avec une force d'au moins 1000 N.

3. Appareil selon la revendication 1 ou la revendication 2, dans lequel l'étagère est pourvue d'éléments de support qui s'ajustent sur des supports dans le cadre et dans lequel les éléments de correction sont agencés pour serrer les éléments de support.

4. Appareil selon une quelconque revendication précédente, dans lequel l'unité de commande stocke un nombre de dimensions standard d'une étagère, la section d'essai comprend en outre un élément de mesure et la section d'essai est capable de déterminer un nombre de dimensions de l'étagère, sélectionnées parmi le groupe constitué de : la largeur ; la longueur ; la profondeur ; le degré de concavité ; la courbure ; la torsion ; la présence d'un bord ; et la position et la présence d'éléments de support et dans lequel la section d'essai compare les dimensions aux dimensions standard et rejette une étagère distribuée qui s'écarte des données standard.

5. Appareil selon l'une quelconque des revendications 1 à 4, dans lequel la section d'essai comprend un nombre de capteurs et les capteurs sont réglables mécaniquement.

6. Appareil selon l'une quelconque des revendications précédentes, comprenant en outre une section d'élimination pour la dépose des étagères rejetées.

7. Appareil selon la revendication 3, dans lequel le cadre est constitué de composants séparés qui sont chacun pourvus de supports, l'appareil comprenant en outre un système de mise à niveau pour égaliser les hauteurs des supports des composants séparés du cadre.

8. Appareil selon l'une quelconque des revendications précédentes, dans lequel la section de positionnement comprend en outre un élément de levage pour lever le cadre de sorte qu'une étagère saisie puisse être montée à une hauteur dans le cadre qui est sensiblement conforme à la hauteur de la section d'essai.

9. Appareil selon l'une quelconque des revendications précédentes, dans lequel la section de distribution distribue les étagères une par une à partir d'une pile, de préférence à une hauteur sensiblement identique à celle de la section d'essai.

10. Procédé d'assemblage d'une unité d'étagères, l'unité d'étagères comprenant un cadre (2) et une pluralité d'étagères détachables (4) supportées par le cadre, le procédé comprenant les étapes consistant à :
distribuer une étagère à une section d'essai (24) ;
réaliser des essais sur un nombre de caractéristiques de l'étagère et comparer les caractéristiques à des conditions prédéterminées ;
déformer l'étagère pour facultativement l'ajuster aux conditions prédéterminées ;
approuver les étagères qui satisfont les conditions ;
saisir l'étagère approuvée ; et
monter l'étagère saisie dans le cadre.

11. Procédé selon la revendication 10, dans lequel la déformation de l'étagère se produit en serrant une partie de l'étagère avec un élément de correction avec une force supérieure à 1000 N.

12. Procédé selon l'une quelconque des revendications 10 ou 11, comprenant en outre les étapes consistant à rejeter et à déposer des étagères qui ne satisfont pas les conditions prédéterminées.

13. Procédé selon l'une quelconque des revendications 10 à 12, dans lequel les étapes consistant à contrôler, approuver, saisir, monter et facultativement également distribuer une étagère se produisent sensiblement à une hauteur constante.

14. Système comprenant une association d'une unité d'étagères, possédant un cadre et une pluralité d'étagères détachables supportées par le cadre, et un appareil pour assembler l'unité d'étagères selon une des revendications 1 à 9 incluse.

15. Système selon la revendication 14, dans lequel l'unité d'étagères comprend un chariot pourvu de plusieurs roues.
